# EUROPÄISCHE PATENTANMELDUNG

(11) **EP 0 990 547 A2**
(43) Veröffentlichungstag der Anmeldung: **05.04.2000**
(21) Anmeldenummer: 99119313.7
(22) Anmeldetag: 29.09.1999
(51) Int. Cl.: B60K 15/03

(54) **Kunststoffbehälter**

(30) Priorität: 02.10.1998 DE 19845352
(71) Anmelder: Mannesmann VDO Aktiengesellschaft, 60388 Frankfurt am Main (DE)
(72) Erfinder: Löw, Peter Andreas, 64380 Rossdorf (DE); Kochsmeier, Christian, 44137 Dortmund (DE); Zapp, Thomas, Dr., 44265 Dortmund (DE); Pfahl, Wolfgang, 65719 Hofheim (DE); Coulton, Jerome, Dr., 60528 Frankfurt (DE)
(74) Vertreter: Klein, Thomas, Dipl.-Ing.

(57) **Zusammenfassung**

In Kunststoffbehälter zugeordnete Bauelemente werden nach der Herstellung des Kunststoffbehälters in diesen eingebracht und montiert. Nachteilig dabei ist, daß die Bauelemente in ihrer Lage im Kunststoffbehälter fixiert werden müssen. Dadurch sind zusätzliche Arbeitsschritte notwendig. Mit den neuen Kunststoffbehältern soll der Montageaufwand von in dem Behälter anzuordnenden Bauelementen, wie Druckregler, Filter, Pumpen verringert werden.

Der neue Kunststoffbehälter besteht aus zwei mittels Spritzgießen erzeugten Halbschalen, an den Teile der Bauelemente während des Spritzgießens angeformt sind. Dadurch entfällt die Befestigung dieser Bauelemente im Kunststoffbehälter, so daß sich der Montageprozeß wesentlich vereinfacht. Gleichzeitig werden Montagefehler weitgehend ausgeschlossen.

Der Kunststoffbehälter eignet sich für den Einsatz in Kraftfahrzeugen, vorzugsweise als Kraftstoffbehälter.

## Beschreibung

Die Erfindung betrifft einen Kunststoffbehälter, vorzugsweise einen Kraftstoffbehälter für ein Kraftfahrzeug, mit an den Wänden des Kunststoffbehälters angeordneten Bauelementen.

Solche als Kraftstoffbehälter ausgebildeten Kunststoffbehälter werden in heutigen Kraftfahrzeugen eingesetzt und sind somit bekannt. Um die Versorgung der Brennkraftmaschine mit Kraftstoff aus dem Kraftstofftank in jeder Situation zu ermöglichen und aufgrund der komplizierten Formen, die ein derartiger Kunststoffbehälter aufweisen kann, sind eine Vielzahl von Baugruppen, z. B. eine Fördereinheit, Saugstrahlpumpen, Ventile und Druckregler im Innern des Kunststoffbehälters notwendig.

In Abhängigkeit vom Herstellungsverfahren unterscheidet man zwei Arten von Kunststoffbehältern. Sogenannte geblasene Kunststoffbehälter werden als frisch extrudiertes Rohr in eine Hohlform mit einem Innendruck beaufschlagt, so daß sich das Rohr an die Wandung der Hohlform anlegt. In den geblasenen Kunststoffbehälter werden danach über die Einfüllöffnung und zusätzliche Montageöffnungen die Bauelemente in den Kunststoffbehälter eingebracht und montiert. Die Montage gestaltet sich aufgrund der Ausgestaltungen des Kunststoffbehälters oft sehr schwierig und ist nur mit großem Aufwand möglich.

Eine verbesserte Montage ist in Kunststoffbehältern möglich, die mittels Spritzgießverfahren hergestellt sind. Der Kunststoffbehälter wird aus zwei spritzgegossenen Halbschalen gefertigt, die miteinander verschweißt werden. Die Montage aller Bauelemente erfolgt in den Halbschalen vor dem Verschweißen. Nachteilig hierbei ist, daß die Bauelemente in ihrer Lage fixiert werden müssen, damit sie jederzeit in ihrer Position bleiben. So müssen die Saugstrahlpumpen und die Fördereinheit am tiefsten Punkt im Kunststoffbehälter befestigt werden, um eine möglichst vollständige Entleerung zu ermöglichen, bzw. auch bei einem minimalen Füllstand eine sichere Versorgung der Brennkraftmaschine mit Kraftstoff zu gewährleisten. Vielfach erfolgt das Befestigen mittels Klammern oder Anschweißen. Der Montageaufwand und die Kosten für derartige Kunststoffbehälter sind damit immer noch sehr hoch.

Der Erfindung liegt somit die Aufgabe zugrunde, einen Kunststoffbehälter mit einem gegenüber herkömmlichen Behältern deutlich verringertem Montageaufwand für in seinem Innern anzuordnende Bauelemente zu schaffen.

Die Aufgabe wird mit den Merkmalen des Anspruchs 1 gelöst. Vorteilhafte Ausgestaltungen sind in den Ansprüchen 2 bis 7 beschrieben.

Der erfindungsgemäße Kunststoffbehälter besteht aus zwei spritzgegossenen Halbschalen, in die während des Herstellungsprozesses Teile von in dem Kunststoffbehälter anzuordnenden Bauelementen an die Wandung der Halbschalen mittels Spritzgießen angeformt sind.

Der Vorteil dieser Kunststoffbehälter besteht darin, daß durch das Anspritzen von Teile der Bauelemente, diese bereits am Kunststoffbehälter befestigt sind, wodurch das anschließende Befestigen der Bauelemente bei der Montage entfällt. Neben der Einsparung der Befestigungsmitttel wird so der Montageprozeß wesentlich vereinfacht und gestaltet sich damit erheblich kostengünstiger als die Montage von Bauteilen in bisherigen Kunststoffbehältern.

Ein weiterer Vorteil ist dadurch gegeben, daß infolge der nunmehr vorgegebenen Lage der angespritzten Bestandteile Montagefehler weitgehend ausgeschlossen sind. Auch die Herstellung der erfindungsgemäßen Kunststoffbehälter gestaltet sich gegenüber der bisherigen Herstellung kaum aufwendiger, da eine Vielzahl der Teile bereits durch entsprechende Gestaltung der Spritzgießformen in Verbindung mit Kernen herstellbar sind.

In vorteilhafter Ausgestaltung der Erfindung sind die Teile als Gehäuse ausgebildet. Diese Gehäuse können dabei Bestandteil der verschiedensten Bauelemente, wie Ventile, Druckregler, Filter, Füllstandssensoren oder Pumpen sein. Insbesondere bei einem Einsatz des Kunststoffbehälters als Kraftstoffbehälter ist es vorteilhaft, wenn an die den unteren Bereich bildende Halbschale ein Schwalltopf oder Schwallwände an die Behälterinnenwand angespritzt sind.

Eine besonders vorteilhafte Ausgestaltung ist dann gegeben, wenn zusätzlich zu einem Gehäuse weitere Funktionsteile, z. B. Ventilgehäuse mit Ventilsitz, angespritzt sind. In der anschließenden Montage ist dann nur noch das Schließ- und Stellglied einzulegen und entsprechend zu fixieren.

Des weiteren ist es vorteilhaft, daß Teile Bohrungen zum Anschluß von Verbindungsleitungen besitzen. Ebenso können die Teile Anschlußstutzen aufweisen.

In besonderes vorteilhafter Weise sind die Teile der Bauelemente an Leitungen, die nach dem Gasinnendruck-Verfahren erzeugt und im Kunststoffbehälter integriert sind, angeordnet. Derartige Teile können Ventilgehäuse oder Saugstrahlpumpen sein. Insbesondere die Anordnung von Crash-Ventilen, die im Falle einer Störung das Auslaufen von Flüssigkeiten aus den Leitungen vermeiden, ist sehr vorteilhaft. Durch diese Ausgestaltung lassen sich Verbindungsstellen zwischen einzelnen Bauelementen einsparen, was zu nicht unerheblichen Kosteneinsparungen führt.

Die Ausgestaltungen des erfindungsgemäßen Kunststoffbehälters sind jedoch nicht nur auf Teile von Bauelementen, die in seinem Inneren angeordnet sind, beschränkt. Die Teile können bei entsprechenden Anforderungen ebenso an dessen Außenseiten angeordnet sein.

Der Kunststoffbehälter ist somit besonders als Kraftstoffbehälter für ein Kraftfahrzeug geeignet. Darüber hinaus ist er jedoch auch für alle anderen Anwendungsgebiete geeignet, bei denen Bauelemente als Ein- oder Anbauten mit dem Kunststoffbehälter in Verbindung stehen, so z. B. als Behälter einer Scheibenreinigungsanlage oder als Kühlwasserbehälter.

An zwei Ausführungsbeispielen wird die Erfindung näher erläutert. Dabei zeigen:
- Fig. 1: einen Schnitt durch einen Kunststoffbehälter mit einem Druckregler und
- Fig. 2: einen Schnitt durch einen Kunststoffbehälter mit einem Ventilgehäuseteil und einer im Kunststoffbehälter integrierten Leitung.

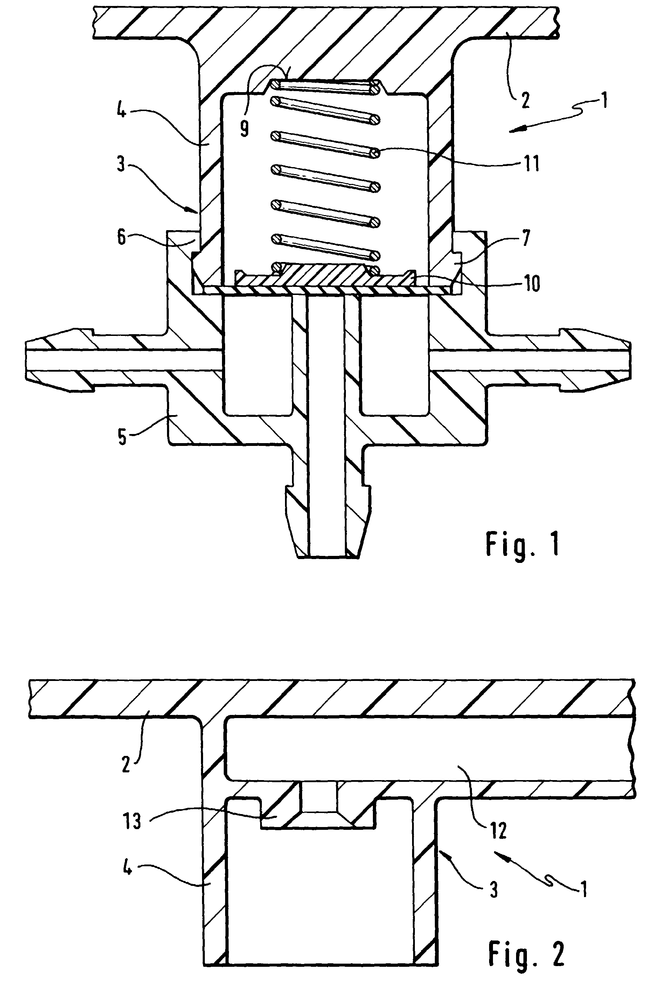

Der in Figur 1 abschnittsweise dargestellte Kunststoffbehälter 1 besteht aus zwei die Behälterwand bildenden, spritzgegossenen Halbschalen, wobei an der an den oberen Bereich bildenden Halbschale 2 ein Druckregler 3 angeordnet ist. Der Druckregler 3 besteht aus zwei Gehäuseteilen 4, 5, die Bestandteile des Druckreglers 3 sind. Das Gehäuseteil 4 ist an der Halbschale 2 angeformt, indem beim Spritzgießen der Halbschale 2 die Innenform einer Ausnehmung aufweist, die der Außenkontur des Gehäuseteils 4 entspricht. In der Innenform ist ein Kern angeordnet, dessen Außenkontur die Innenkontur des Gehäuseteils 4 widerspiegelt. Beim Spritzgießen der Halbschale 2 füllt sich gleichzeitig auch dieser erzeugte Hohlraum, so daß der diesen Hohlraum füllende Kunststoff das Gehäuseteil 4 bildet. Das Gehäuseteil 5 ist so zum Gehäuseteil 4 angeordnet, daß Rasthaken 6 über einen Ringwulst 7 des Gehäuseteile 4 greifen und gleichzeitig eine Membran 8 zwischen beiden Gehäuseteilen 4, 5 geklemmt ist. Eine in eine Ausnehmung 9 und einem Haltering 10 zentrierte Spiralfeder 11 spannt die Membran 8 vor.

Der in Figur 2 wiederum abschnittsweise dargestellte Kunststoffbehälter besitzt in seinem von der Halbschale 2 gebildeten oberen Bereich einen nach dem Gasinnendruckverfahren erzeugte Leitung 12. Am Ende dieser Leitung 12 ist ein Gehäuseteil 4 angeordnet, das durch Ausfüllen mit Kunststoff eines von einer Innenform unter Einsatz eines Kerns erzeugten Hohlraumes hergestellt wurde. Dabei wurde mit dem Gehäuseteil 4 gleichzeitig ein als Ventilsitz wirkender Abschnitt 13 angespritzt.

## Patentansprüche

1. Kunststoffbehälter, insbesondere Kraftstoffbehälter für ein Kraftfahrzeug, bestehend aus zwei durch Spritzgießen hergestellten und anschließend miteinander verschweißten Halbschalen, mit in dem Kunststoffbehälter angeordneten Bauelementen, insbesondere Ventile, Regler, Filter und Fördereinheiten, **dadurch gekennzeichnet**, daß an den Halbschalen (2) mittels Spritzgießen Teile (4) der Bauelemente (3) angeformt sind.

2. Kunststoffbehälter nach Anspruch 1, **dadurch gekennzeichnet**, daß das die Teile (4) an den Innenwänden der Halbschalen (2) angeformt sind.

3. Kunststoffbehälter nach Anspruch 1, **dadurch gekennzeichnet**, daß das die Teile (4) an den Außenwänden der Halbschalen (2) angeformt sind.

4. Kunststoffbehälter nach mindestens einem der Ansprüche 1 bis 3, **dadurch gekennzeichnet**, daß das Teil eines Bauelementes ein Gehäuse (4), vorzugsweise ein Ventil-, Filter-, Reglergehäuse oder ein Schwalltopf ist.

5. Kunststoffbehälter nach mindestens einem der Ansprüche 1 bis 4, **dadurch gekennzeichnet**, daß das Gehäuse (4) mindestens einen Funktionsbereich, vorzugsweise einen Ventilsitz, besitzt.

6. Kunststoffbehälter nach mindestens einem der Ansprüche 1 bis 5, **dadurch gekennzeichnet**, daß das Gehäuse (4) Bohrungen und/oder Anschlußstutzen.

7. Kunststoffbehälter nach mindestens einem der Ansprüche 1 bis 3, **dadurch gekennzeichnet**, daß die Bauelemente Rast-, Fixier- oder Haltemittel sind.
